# EUROPEAN PATENT APPLICATION

(11) **EP 4 578 625 A1**
(43) Date of publication of application: **02.07.2025**
(21) Application number: 24220092.1
(22) Date of filing: 16.12.2024
(51) Int. Cl.: B29C 48/00, B29C 48/10, B29C 48/88, B29C 48/92

(54) **INFLATION MOLDING APPARATUS AND CONTROL DEVICE**

(30) Priority: 27.12.2023 JP 2023221878
(71) Applicant: Sumitomo Heavy Industries Modern, Ltd., Kanagawa 223-8511 (JP)
(72) Inventor: FUJIWARA, Kazumasa, Yokohama Kanagawa, 223-8511 (JP)
(74) Representative: Louis Pöhlau Lohrentz

(57) **Abstract**

There is provided an inflation molding apparatus (100) of which product value is enhanced. An inflation molding apparatus (100) includes a gas supply/exhaust device (120) that supplies gas to and exhausts gas from a bubble and a control device (126) that controls the gas supply/exhaust device (120). In a case where a diameter of the bubble is to be changed, the control device (126) controls a gas supply/exhaust amount difference of the gas supply/exhaust device (120) based on information on the bubble of which the diameter is not yet changed or is being changed.

## Description

### BACKGROUND OF THE INVENTION

### Field of the Invention

The present invention relates to an inflation molding apparatus and a control device.

### Description of Related Art

An inflation molding apparatus that extrudes a molten molding material from a die into a tubular shape, blows air into the extruded molding material to inflate the extruded molding material, molds a thin film (hereinafter, also referred to as a bubble), folds the thin film to form a flat film, winds the flat film to form a roll body is known (for example, Japanese Unexamined Patent Publication No. 2017-177348).

### SUMMARY OF THE INVENTION

It is known to control an air supply/exhaust amount difference for the bubble to change a diameter of the bubble and, by extension, a width of the flat film (flat length). In this case, the bubble may fall into an unstable state in which the vibration of the bubble does not converge even after a long time. In a case where the bubble falls into the unstable state, it is necessary to take a measure such as temporarily changing molding conditions. For this reason, time is taken to change the width of the flat film, so that the loss of the molding material is increased.

The present invention has been made in view of such circumstances, and one of exemplary objects of an aspect of the present invention is to provide an inflation molding apparatus that can change a flat length without destabilizing a bubble.

In order to solve the above-described problem, an inflation molding apparatus according to an aspect of the present invention includes a gas supply/exhaust device that supplies gas to and exhausts gas from a bubble and a control device that controls the gas supply/exhaust device. In a case where a diameter of the bubble is to be changed, the control device controls a gas supply/exhaust amount difference of the gas supply/exhaust device based on information on the bubble of which the diameter is not yet changed or is being changed.

Another aspect of the present invention provides a control device. This device is a control device of an inflation molding apparatus including a gas supply/exhaust device that supplies gas to and exhausts gas from a bubble. The control device controls a gas supply/exhaust amount difference of the gas supply/exhaust device based on information on the bubble of which a diameter is not yet changed or is being changed, in a case where the diameter of the bubble is to be changed.

Any combination of the above components or embodiments in which the components or expressions of the present invention are replaced with each other between methods, apparatuses, systems, or the like are also effective as aspects of the present invention.

According to the present invention, it is possible to provide an inflation molding apparatus that can change a flat length without destabilizing a bubble.

### BRIEF DESCRIPTION OF THE DRAWINGS

Fig. 1 is a diagram showing a schematic configuration of an inflation molding apparatus according to an embodiment.
Fig. 2 is a block diagram schematically showing functions and a configuration of a control device shown in Fig. 1.

### DETAILED DESCRIPTION OF THE INVENTION

The present invention will be described below based on a preferred embodiment with reference to the drawings. The embodiment does not limit the invention and is exemplary, and all the features or combinations thereof described in the embodiment are not necessarily essential to the invention. The same or equivalent components, members, and processing shown in the respective drawings will be denoted by the same reference numerals, and repeated description thereof will be omitted as appropriate.

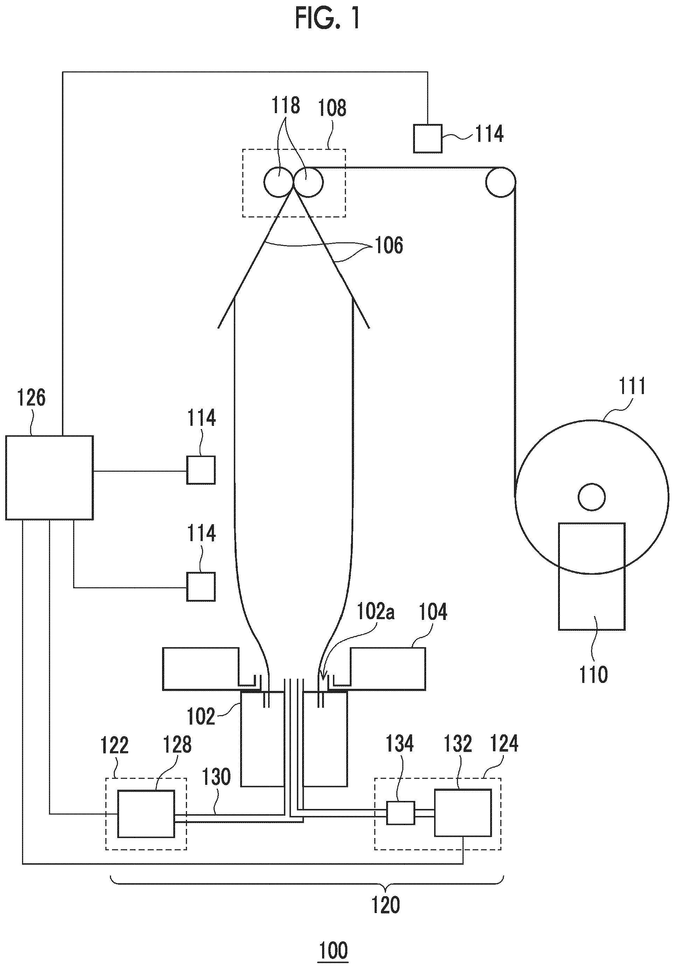

Fig. 1 is a diagram showing a schematic configuration of an inflation molding apparatus 100 according to an embodiment. The inflation molding apparatus 100 includes a die 102, a cooling unit 104, a pair of guide parts 106, a take-out machine 108, a winding machine 110, a bubble state detection unit 114, an air supply/exhaust device 120, and a control device 126.

A molten molding material is extruded in a cylindrical shape from a ring-shaped extrusion port 102a formed in the die 102. Gas is supplied to the inside of the molding material, which is extruded in a cylindrical shape, at an appropriate timing, so that a thin film inflated in a cylindrical shape (hereinafter, also referred to as a "bubble") is molded. Although the present invention is not limited thereto, a case where the gas is air will be described below.

The cooling unit 104 is disposed above the die 102. The cooling unit 104 blows cooling air to the bubble to cool the bubble. The pair of guide parts 106 is disposed above the cooling unit 104. The pair of guide parts 106 guides the bubble to the take-out machine 108. The take-out machine 108 is disposed above the guide parts 106. The take-out machine 108 includes a pair of pinch rollers 118. The pair of pinch rollers 118 is driven and rotated by a motor (not shown), and folds the guided bubble in a flat shape while pulling up the guided bubble. Hereinafter, the bubble which is folded flat, that is, the film, will also be referred to as a flat film. The winding machine 110 winds the flat film to form a film roll body 111.

The bubble state detection unit 114 detects various types of information on a bubble state that is required to specify an allowable value of an air supply/exhaust amount difference to be described later. Therefore, the bubble state detection unit 114 includes one or more appropriate sensors for detecting information on a required bubble state.

For example, the bubble state detection unit 114 may include a thickness detection sensor that is disposed between the cooling unit 104 and the pair of guide parts 106. The thickness detection sensor measures the thickness of the bubble at each position in a circumferential direction while moving around the bubble. The thickness data measured by the thickness detection sensor is transmitted to the control device 126.

Further, for example, the bubble state detection unit 114 may include a width detection sensor that is disposed between the take-out machine 108 and the winding machine 110. The width detection sensor measures a width (flat length) of the flat film at a predetermined cycle. Width data measured by the width detection sensor is transmitted to the control device 126.

Furthermore, for example, the bubble state detection unit 114 may include a shape detection sensor that is disposed between the cooling unit 104 and the pair of guide parts 106. The shape detection sensor measures the shape of the bubble at each position in the circumferential direction while moving around the bubble. The shape detection sensor may be, for example, a visible light camera. The shapes of the bubble at respective positions in the circumferential direction may be measured by a plurality of shape detection sensors that are disposed at, for example, regular intervals in the circumferential direction. In this case, the shape detection sensors do not need to move around the bubble. Shape data measured by the shape detection sensors is transmitted to the control device 126.

The air supply/exhaust device 120 supplies air to and exhausts air from the bubble. The air supply/exhaust device 120 changes an air supply/exhaust amount difference for the bubble to change a diameter of the bubble and, by extension, the width of the flat film. The air supply/exhaust device 120 may also serve as an internal cooling device that supplies cold air into the bubble to cool the bubble from the inside.

The air supply/exhaust device 120 includes an air supply device 122 and an exhaust device 124.

The air supply device 122 supplies air into the bubble. The air supply device 122 is not particularly limited, and includes an air supply unit 128 in the example shown in Fig. 1. The air supply unit 128 may be an air supply blower. The air supply unit 128 supplies air into the bubble via a supply passage 130 according to the control of the control device 126. The air supply unit 128 can adjust a supply flow rate of air. The air supply device 122 may further include a damper that adjusts a supply flow rate of air.

The exhaust device 124 exhausts air from the bubble. The exhaust device 124 is not particularly limited, and includes an exhaust unit 132 and a damper 134 in the example shown in Fig. 1. The exhaust unit 132 may be an exhaust blower or an exhaust pump. The exhaust unit 132 exhausts air from the bubble via an exhaust passage 136 according to the control of the control device 126. The exhaust unit 132 can adjust an exhaust flow rate of air. The damper 134 adjusts an exhaust flow rate of air passing through the exhaust passage 136. The damper 134 has a higher control responsiveness than the exhaust unit 132 in terms of adjusting the exhaust flow rate. Further, the damper 134 can more finely adjust the exhaust flow rate than the exhaust unit 132. That is, the damper 134 has a higher resolution than the exhaust unit 132 in terms of adjusting the exhaust flow rate.

The control device 126 is a device that comprehensively controls the inflation molding apparatus 100.

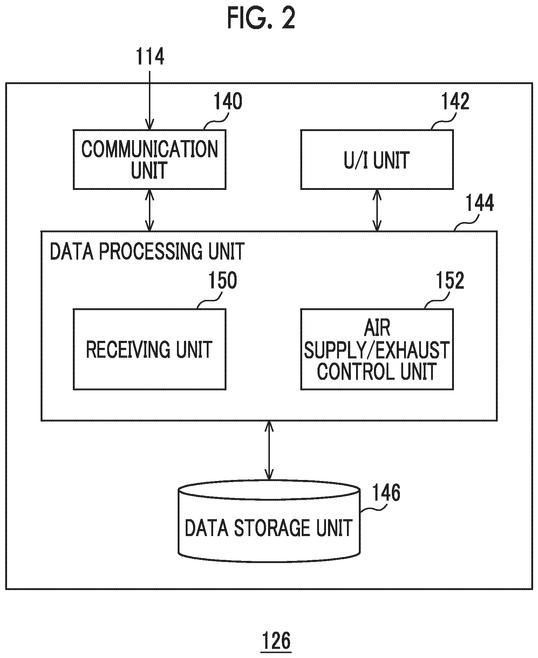

Fig. 2 is a block diagram schematically showing functions and a configuration of the control device 126. Each block shown here can be realized in terms of hardware by elements such as a CPU of a computer or a mechanical device, and can be realized in terms of software by a computer program. Here, functional blocks realized in cooperation of the hardware and the software are shown in Fig. 2. Accordingly, it is understood by those skilled in the art that these functional blocks can be realized in various forms by a combination of hardware and software.

The control device 126 includes a communication unit 140 that performs communication processing with the bubble state detection unit 114 according to various communication protocols, a U/I unit 142 that receives an operation input from a user and causes a display unit to display various screens, a data processing unit 144 that performs various data processing based on data acquired from the communication unit 140 and the U/I unit 142, and a data storage unit 146 that stores data referenced and updated by the data processing unit 144. For example, the U/I unit 142 may receive an instruction to change the width of the film.

The data processing unit 144 includes a receiving unit 150 and an air supply/exhaust control unit 152. In addition, only components attracting attention in the present embodiment are shown as components of the data processing unit 144.

The receiving unit 150 receives various data relating to the bubble state from the bubble state detection unit 114.

The air supply/exhaust control unit 152 controls the supply of the air into the bubble that is performed by the air supply device 122 and the exhaust of the air from the bubble that is performed by the exhaust device 124. Particularly, the air supply/exhaust control unit 152 controls an air supply/exhaust amount difference (Q1-Q2) that is a difference between the amount Q1 of air supplied into the bubble and the amount Q2 of air exhausted from the bubble, and changes the diameter of the bubble and, by extension, the width of the flat film to a desired size. In a case where the diameter of the bubble and, by extension, the width of the flat film are to be increased, the control device 126 temporarily increases the air supply/exhaust amount difference to a positive value. In other words, the control device 126 increases the internal pressure of the bubble. In a case where the diameter of the bubble and, by extension, the width of the flat film are to be reduced, the control device 126 temporarily increases the air supply/exhaust amount difference to a negative value. In other words, the control device 126 reduces the internal pressure of the bubble.

Incidentally, in a case where the diameter of the bubble and, by extension, the width of the flat film are to be changed during molding, the flat film in the middle of the change causes a loss. Therefore, from the viewpoint of reducing the loss of the molding material, it also seems desirable to increase the air supply/exhaust amount difference for the bubble to a positive or negative value. However, in a case where the air supply/exhaust amount difference for the bubble is excessively increased to a positive or negative value, that is, in a case where the diameter of the bubble is rapidly changed, the bubble may fall into an unstable state. The unstable state of the bubble refers to a state where the bubble vibrates and the vibration of the bubble does not converge even though a predetermined period (for example, 15 minutes after the air supply/exhaust amount difference reaches a target value) has passed. A state where the vibration has converged refers to a state where an amplitude of the vibration is equal to or less than a predetermined value (for example, a target value ± 20). In a case where the bubble falls into the unstable state, it is necessary to take a measure such as temporarily changing molding conditions. For this reason, time is taken to change the width of the flat film, so that the loss of the molding material is increased.

As a result of the study on the destabilization of the bubble, the present inventor has recognized that there is a concern that the bubble may fall into the unstable state in a case where the air supply/exhaust amount difference exceeds a certain value, and the value varies depending on "the ease of expansion and contraction of the bubble" or "the amount of air in the bubble" at that time.

Therefore, in the present embodiment, in a case where the diameter of the bubble and, by extension, the width of the flat film are to be changed, the air supply/exhaust control unit 152 specifies an index value of the air supply/exhaust amount difference at which the bubble does not fall into the unstable state and controls the air supply/exhaust amount difference such that the air supply/exhaust amount difference does not exceed the index value or an allowable value based on the index value. The index value can also be regarded as an upper limit of the air supply/exhaust amount difference in the present embodiment. The allowable value is a value that is obtained in a case where the index value is multiplied by a safety factor (for example, 0.9) . The air supply/exhaust control unit 152 may control the air supply/exhaust amount difference such that the air supply/exhaust amount difference does not exceed the index value. Alternatively, the air supply/exhaust control unit 152 may control the air supply/exhaust amount difference such that the air supply/exhaust amount difference does not exceed the allowable value. In any case, since the air supply/exhaust amount difference is controlled not to exceed the index value or the allowable value, the diameter of the bubble and, by extension, the width of the flat film can be changed without the bubble falling into the unstable state. Therefore, the loss of the molding material can be reduced.

Meanwhile, since the diameter of the bubble is more rapidly changed as the bubble is more likely to expand and contract, the bubble is more likely to fall into the unstable state. Further, even though the air supply/exhaust amount difference is constant, a change rate of the amount of air in the bubble is higher and the diameter of the bubble is more rapidly changed as the amount of air in the bubble is smaller. For this reason, the bubble is likely to fall into the unstable state. Therefore, the index value of the air supply/exhaust amount difference is reduced as the bubble is more likely to expand and contract, and is increased as the bubble is less likely to expand and contract. Furthermore, the index value of the air supply/exhaust amount difference is reduced as the amount of air in the bubble is smaller, and is increased as the amount of air in the bubble is larger.

The air supply/exhaust control unit 152 preferably controls the air supply/exhaust amount difference such that the air supply/exhaust amount difference is increased as much as possible without exceeding the index value or the allowable value of the air supply/exhaust amount difference. For example, the air supply/exhaust control unit 152 may increase the air supply/exhaust amount difference up to the index value. Alternatively, the air supply/exhaust control unit 152 may increase the air supply/exhaust amount difference up to the allowable value. In any case, since the air supply/exhaust amount difference is increased as much as possible without exceeding the index value or the allowable value of the air supply/exhaust amount difference, the diameter of the bubble and, by extension, the width of the flat film can be more quickly changed. Therefore, the loss of the molding material can be further reduced.

Specifically, the air supply/exhaust control unit 152 changes the air supply/exhaust amount difference by controlling at least one of the amount of air supplied by the air supply unit 128 of the air supply device 122, an opening degree of the damper 134 of the exhaust device 124, or the amount of air exhausted by the exhaust unit 132 of the exhaust device 124 to change at least one of the amount Q1 of supplied air or the amount Q2 of exhaust air.

For example, the air supply/exhaust control unit 152 may increase or decrease the air supply/exhaust amount difference (Q1-Q2) by controlling the opening degree of the damper 134 to increase or decrease the amount Q2 of exhaust air. In this case, the amount Q2 of exhaust air and, by extension, the air supply/exhaust amount difference can be finely adjusted.

Further, for example, the air supply/exhaust control unit 152 may increase or decrease the air supply/exhaust amount difference (Q1-Q2) by controlling the amount of air, which is exhausted by the exhaust unit 132, in addition to the opening degree of the damper 134 to increase or decrease the amount Q2 of exhaust air. In this case, the amount Q2 of exhaust air and, by extension, the air supply/exhaust amount difference can be finely adjusted. Furthermore, since a larger air supply/exhaust amount difference can be realized, the width of the flat film can be changed in a shorter time, for example, in a case where the index value of the air supply/exhaust amount difference is large. Therefore, the air supply/exhaust control unit 152 may adjust the amount Q2 of exhaust air only by the damper 134 in a case where the index value is small, that is, the index value is less than a predetermined amount. The air supply/exhaust control unit 152 may adjust the amount Q2 of exhaust air by the exhaust unit 132 in addition to the damper 134 or by the exhaust unit 132 instead of the damper 134 in a case where the index value is large, that is, the index value is equal to or greater than a predetermined amount.

The air supply/exhaust control unit 152 may specify the index value of the air supply/exhaust amount difference at a predetermined cycle during the change of the width of the flat film, that is, until the end of the change of the width of the flat film after the start of the change of the width of the flat film, and may change the air supply/exhaust amount difference each time a new index value is specified. The reason for this is that the index value of the air supply/exhaust amount difference is also changed in a case where the diameter of the bubble is changed.

Subsequently, a method of specifying the index value of the air supply/exhaust amount difference will be described. The air supply/exhaust control unit 152 specifies the index value of the air supply/exhaust amount difference based on information on the current bubble, that is, the bubble of which the diameter is not yet changed in a case where the diameter of the bubble is not yet changed or the bubble of which the diameter is being changed in a case where the diameter of the bubble is being changed. The information on the bubble is information on the ease of expansion and contraction of the bubble or information on the amount of air in the bubble. The air supply/exhaust control unit 152 may specify the index value of the air supply/exhaust amount difference based on information on the ease of expansion and contraction of one or more bubbles. The air supply/exhaust control unit 152 may specify the index value of the air supply/exhaust amount difference based on information on the amount of air in one or more bubbles. The air supply/exhaust control unit 152 may specify the index value of the air supply/exhaust amount difference based on information on the ease of expansion and contraction of one or more bubbles and information on the amount of air in one or more bubbles.

Examples of information on the ease of expansion and contraction of the bubble include the followings.
· Viscosity of bubble
· Thickness of bubble
· Frost line height
· Melt viscosity of molding material
· Shear rate of molding material
· Temperature of molding material
· Temperature of die 102 at predetermined position
· Temperature of extruder at predetermined position
· Amount of molding material extruded from extrusion port 102a of die 102
· Extrusion rate from extrusion port 102a of die 102
· Take-out rate that is rate at which bubble is taken out
· Blowing rate
· Shape of bubble (for example, profile of diameter of bubble from extrusion port 102a of die 102 to pair of pinch rollers 118)

Examples of information on the amount of air in the bubble include the followings.
· Shape of bubble
· Height from die 102 to pair of pinch rollers 118
· Blowing rate
· Shape of bubble (diameter of bubble)
· Width of flat film
• Diameter of extrusion port 102a of die 102

The air supply/exhaust control unit 152 may specify the index value of the air supply/exhaust amount difference based on at least one piece of information on the bubble among these.

For example, the air supply/exhaust control unit 152 may specify the index value using a trained learning machine that has been subjected to machine learning. In this case, the learning machine may be a learning machine that is trained to output the index value of the air supply/exhaust amount difference in a case where at least one piece of information on the bubble is input.

The basic configuration of the inflation molding apparatus 100 is as described above.

Subsequently, an operation of the inflation molding apparatus 100 for changing the width of the flat film will be described. In a case where the control device 126 receives an instruction to change the width of the flat film, the control device 126 specifies the index value of the air supply/exhaust amount difference based on at least one piece of information on the bubble. The control device 126 controls the air supply/exhaust amount difference such that the air supply/exhaust amount difference does not exceed the specified index value or the allowable value, and changes the diameter of the bubble and, by extension, the width of the flat film.

Subsequently, an effect of the present embodiment will be described. According to the present embodiment, in a case where the width of the flat film is to be changed during molding, an index value of the air supply/exhaust amount difference at which the bubble does not fall into the unstable state is specified based on information on the ease of expansion and contraction of the bubble or information on the amount of air in the bubble, and the air supply/exhaust amount difference is controlled not to exceed the index value. Accordingly, the width of the flat film can be changed without the bubble falling into the unstable state.

The present invention has been described above based on the embodiment. The embodiment is exemplary, and it will be understood by those skilled in the art that various modification examples can be made for combinations of the respective components and respective processing processes and such modification examples are also within the scope of the present invention. Such modification examples will be described below.

### (First modification example)

Unlike in the embodiment, the index value may not be an upper limit value of the air supply/exhaust amount difference. The index value may simply be a smaller value as the bubble is more likely to expand and contract or the amount of air in the bubble is smaller, and may be a larger value as the bubble is less likely to expand and contract or the amount of air in the bubble is larger. In this case, for example, the air supply/exhaust control unit 152 may reduce the air supply/exhaust amount difference as the index value is smaller, and may increase the air supply/exhaust amount difference as the index value is larger. The air supply/exhaust control unit 152 may define a function in which the air supply/exhaust amount difference is reduced as the index value is smaller and the air supply/exhaust amount difference is increased as the index value is larger, and may determine the air supply/exhaust amount difference based on the function. Alternatively, the data storage unit 146 may store a table in which the index value and the air supply/exhaust amount difference are associated with each other, and the air supply/exhaust control unit 152 may determine the air supply/exhaust amount difference corresponding to the index value at that time with reference to the table.

As a further modification example, the index value may be a larger value as the bubble is more likely to expand and contract or the amount of air in the bubble is smaller, and may be a smaller value as the bubble is less likely to expand and contract or the amount of air in the bubble is larger. In this case, for example, the air supply/exhaust control unit 152 may reduce the air supply/exhaust amount difference as the index value is larger, and may increase the air supply/exhaust amount difference as the index value is smaller. The air supply/exhaust control unit 152 may define a function in which the air supply/exhaust amount difference is reduced as the index value is larger and the air supply/exhaust amount difference is increased as the index value is smaller, and may determine the air supply/exhaust amount difference based on the function. Alternatively, the data storage unit 146 may store a table in which the index value and the air supply/exhaust amount difference are associated with each other, and the air supply/exhaust control unit 152 may determine the air supply/exhaust amount difference corresponding to the index value at that time with reference to the table.

That is, the air supply/exhaust control unit 152 determines the air supply/exhaust amount difference corresponding to the index value at that time based on a correlation between the index value and the air supply/exhaust amount difference.

### (Second modification example)

Unlike in the embodiment and the above-described modification example, the air supply/exhaust amount difference may be determined without specifying the index value serving as an intermediate value.

Specifically, in a case where the diameter of the bubble is to be changed, the air supply/exhaust control unit 152 reduces the air supply/exhaust amount difference as the bubble is more likely to expand and contract or the amount of air in the bubble is smaller, and increases the air supply/exhaust amount difference as the bubble is less likely to expand and contract or the amount of air in the bubble is larger. In this case, for example, a function or a table defining a relationship between information on the bubble and the air supply/exhaust amount difference may be prepared, and the air supply/exhaust control unit 152 may determine the air supply/exhaust amount difference corresponding to the information on the bubble at that time, based on the function or the table.

Although the present invention has been described using specific words and phrases based on the embodiment, the embodiment merely illustrates one aspect of the principle and application of the present invention. Many modification examples and changes in disposition are allowed in the embodiment without departing from the scope of the present invention defined in claims. Further, any combination of the embodiment and the modification examples is also useful as an embodiment of the present invention. A new embodiment made from the combination has the effects of each of the embodiment and the modification examples that are combined.

### Brief Description of the Reference Symbols

- 100:: Inflation molding apparatus
- 102:: Die
- 120:: Air supply/exhaust device
- 122:: Air supply device
- 124:: Exhaust device
- 126:: Control device
- 132:: Exhaust unit
- 134:: Damper

## Claims

1. An inflation molding apparatus (100) comprising:
a gas supply/exhaust device (120) that supplies gas to and exhausts gas from a bubble; and
a control device (126) that controls the gas supply/exhaust device (120),
wherein in a case where a diameter of the bubble is to be changed, the control device (126) controls a gas supply/exhaust amount difference of the gas supply/exhaust device (120) based on information on the bubble of which the diameter is not yet changed or is being changed.

2. The inflation molding apparatus (100) according to claim 1,
wherein in a case where the diameter of the bubble is to be changed, the control device (126) specifies an index value of the gas supply/exhaust amount difference based on the information on the bubble and controls the gas supply/exhaust amount difference of the gas supply/exhaust device (120) based on the specified index value.

3. The inflation molding apparatus (100) according to claim 2,
wherein the index value is reduced as the bubble is more likely to expand and contract, and is reduced as an amount of gas in the bubble is smaller.

4. The inflation molding apparatus (100) according to claim 2,
wherein in a case where the diameter of the bubble is to be changed, the control device (126) controls the gas supply/exhaust amount difference of the gas supply/exhaust device (120) such that the gas supply/exhaust amount difference is reduced as the index value is smaller.

5. The inflation molding apparatus (100) according to claim 2,
wherein in a case where the diameter of the bubble is to be changed, the control device (126) controls the gas supply/exhaust amount difference of the gas supply/exhaust device (120) such that the gas supply/exhaust amount difference does not exceed the index value or an allowable value based on the index value.

6. The inflation molding apparatus (100) according to claim 2,
wherein in a case where the diameter of the bubble is to be changed, the control device (126) controls the gas supply/exhaust amount difference of the gas supply/exhaust device (120) based on a correlation between the index value and the gas supply/exhaust amount difference.

7. The inflation molding apparatus (100) according to claim 2,
wherein the gas supply/exhaust device (120) includes a blower and a damper that adjusts a flow rate, and
the control device (126) controls the gas supply/exhaust amount difference only by the damper in a case where an upper limit is less than a predetermined amount, and controls the gas supply/exhaust amount difference by the blower in addition to the damper or instead of the damper in a case where the upper limit is equal to or greater than the predetermined amount.

8. The inflation molding apparatus (100) according to claim 1,
wherein in a case where the diameter of the bubble is to be changed, the control device (126) controls the gas supply/exhaust amount difference of the gas supply/exhaust device (120) based on the information on the bubble of which the diameter is not yet changed or is being changed such that the gas supply/exhaust amount difference is reduced as the bubble is more likely to expand and contract or is reduced as an amount of gas in the bubble is smaller.

9. The inflation molding apparatus (100) according to any one of claims 1 to 8,
wherein the information on the bubble is information on ease of expansion and contraction of the bubble or information on an amount of gas in the bubble.

10. The inflation molding apparatus (100) according to claim 1,
wherein in a case where the diameter of the bubble is to be changed, the control device (126) controls the gas supply/exhaust amount difference of the gas supply/exhaust device (120) based on the information on the bubble of which the diameter is not yet changed in a case where the diameter of the bubble is not yet changed and controls the gas supply/exhaust amount difference of the gas supply/exhaust device (120) based on the information on the bubble of which the diameter is being changed in a case where the diameter of the bubble is being changed.

11. A control device (126) of an inflation molding apparatus (100) including an gas supply/exhaust device (120) that supplies gas to and exhausts gas from a bubble, the control device (126) controlling a gas supply/exhaust amount difference of the gas supply/exhaust device (120) based on information on the bubble of which a diameter is not yet changed or is being changed, in a case where the diameter of the bubble is to be changed.
